Europäisches Patentamt

European Patent Office

Office européen des brevets

(19)

(11) Veröffentlichungsnummer : **0 085 156 B2**

(12) **NEUE EUROPÄISCHE PATENTSCHRIFT**

(45) Veröffentlichungstag der neuen Patentschrift :
27.12.91 Patentblatt 91/52

(51) Int. Cl.$^5$ : **B23D 77/02**

(21) Anmeldenummer : 82111387.5

(22) Anmeldetag : 08.12.82

(54) **Einmesser-Reibahle.**

(30) Priorität : 20.01.82 DE 3201508

(43) Veröffentlichungstag der Anmeldung :
10.08.83 Patentblatt 83/32

(45) Bekanntmachung des Hinweises auf die
Patenterteilung :
17.07.85 Patentblatt 85/29

(45) Bekanntmachung des Hinweises auf die
Entscheidung über den Einspruch :
27.12.91 Patentblatt 91/52

(84) Benannte Vertragsstaaten :
AT BE CH DE FR GB IT LI NL SE

(56) Entgegenhaltungen :
DE-A- 3 022 984
DE-C- 434 233
DE-C- 823 689
DE-C- 1 922 131

(56) Entgegenhaltungen :
FR-A- 2 207 772
FR-A- 2 347 142
FR-A- 2 380 098
GB-A- 255 784
GB-A- 2 007 552
GB-A- 2 075 383
SE-C- 422 287
US-A- 2 226 015
US-A- 2 878 696
US-A- 3 203 493

(73) Patentinhaber : MAPAL Fabrik für
Präzisionswerkzeuge Dr. Kress KG
Obere Bahnstrasse 13 Postfach 1520
W-7080 Aalen (DE)

(72) Erfinder : Die Erfinder haben auf ihre Nennung
verzichtet

(74) Vertreter : Gleiss, Alf-Olav, Dipl.-Ing.
Patentanwalt Silberburg Strasse 187
W-7000 Stuttgart 1 (DE)

EP 0 085 156 B2

## Beschreibung

Die Erfindung betrifft eine Einmesser-Reibahle der die Merkmale des Oberbegriffs des Anspruchs 1 aufweisenden Gattung. Eine solche Reibahle ist mit der FR-A-2 347142 bekannt geworden.

Bei bekannten Reibahlen dieser Gattung ist die rechteckige Messerplatte in einer Aussparung des Messerkopfes angeordnet und wird mittels einer Spannpratze gegen eine Schulter des Messerkopfes gepresst. Zur radialen Einstellung der Messerplatte und zur Einstellung der zum Schaft hin sich verjüngenden Nebenschneide sind zwei in Bohrungen des Messerkopfes verschiebbare Stellglieder vorgesehen, die in die Aussparung des Messerkopfes angreifen und gegen die der wirksamen Nebenschneide entgegengesetzte Fläche der Messerplatte anliegen.

Der Erfindung liegt die Aufgabe zugrunde, an einer Reibahle gemäß Oberbegriff von Anspruch 1, die radiale Einstellung der Messerplatte mit einfacheren Mitteln und rascher zu bewirken und eine sichere Aufnahme der Schnittkräfte im Messerkopf zu gewährleisten.

Diese Aufgabe wird mit den im kennzeichnenden Teil des Anspruch 1 angegeben und in vorteilhafter Weiterbildung des Erfindungsgegenstandes mit den in den Unteransprüchen angegebenen Mitteln gelöst.

Die einfachere radiale Einstellung der Messerplatte wird somit dadurch erreicht, daß die die Messerplatte in einer sie aufnehmenden Aussparung der Spannpratze nur mittels eines einzigen Stellglieds verschwenkt und somit der durch den radialen Abstand des Schneidenanschnitts bestimmte Reibdurchmesser verändert wird. Um zu verhindern, daß sich dieser Durchmesser unter der Einwirkung der Schnittkraft ändert, muß die Spannpratze stabil und so gelagert sein, daß die Lagerscheibe ihre zentrische Lage innerhalb der Aussparung des Messerkopfes weder unter der Einwirkung der Schnittkraft noch unter der Einwirkung des Stellglieds verändert, was durch die Umfassung der Lagerscheibe um mindestens 180° erreicht wird.

Bei Verwendung einer Messerplatte mit kreislinienförmiger Schneide bleibt bei einer radialen Verlagerung der Messerplatte die Verjüngung der Nebenschneide erhalten.

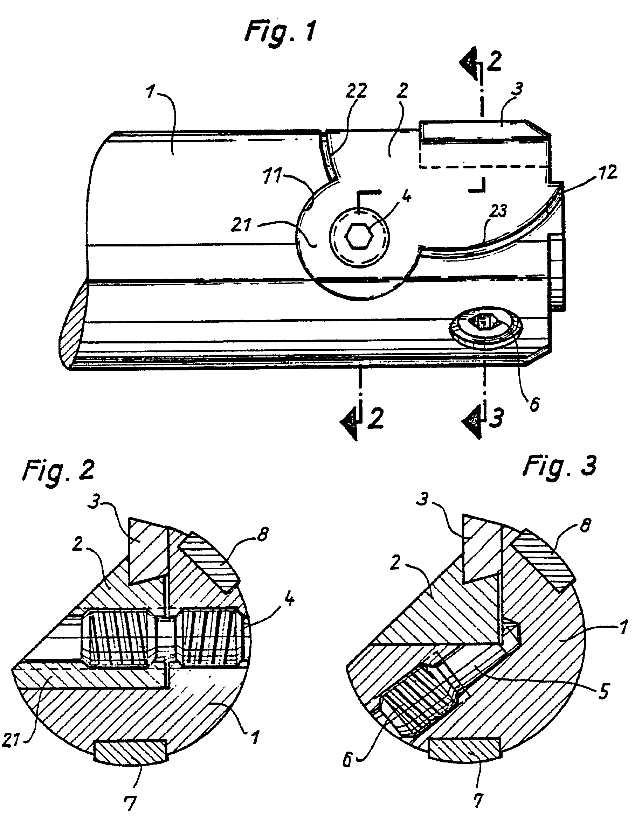

In der Zeichnung ist ein Ausführungsbeispiel der Erfindung in schematischer Weise dargestellt. Es zeigen
Figur 1 eine Seitenansicht des Messerkopfes ;
Figur 2 einen Radialschnitt nach der Schnittlinie 2-2 ;
Figur 3 einen Radialschnitt nach der Schnittlinie 2-3.

Der Messerkopf 1 weist eine Aussparung auf, die durch kreisbogenförmige Randflächen 11 und 12 begrenzt ist. In dieser Aussparung ist die Spannpratze 2 angeordnet, deren eine kreisbogenförmige Begrenzungsfläche 22 einen kleineren Radius aufweist als die Begrenzungsfläche 12 der Messerkopfaussparung, während der schaftseitige, mindestens halbkreisförmige Ansatz 21 dicht gegen die ein Lagerauge bildende Randfläche 11 des Messerkopfes anliegt. Die die Messerplatte 3 in einer Aussparung aufnehmende Spannpratze 2, die in ihrem schaftseitigen, eine Lagerscheibe bildenden Ansatz 21 eine Bohrung zur Aufnahme eines Gewindebolzens 4 mit zwei gegenläufigen Gewinden aufweist, presst die Messerplatte 3 gegen die Schulter des Messerkopfes 1, wobei die Aussparung in dern Spannpratze 2 eine etwas geringere Breite aufweist als die Stärke der Messerplatte 3.

Die radiale Einstellung der Messerplatte 3 erfolgt mittels des als Keil ausgebildeten Stellglieds 5, dessen Längsbewegung in einer Aussparung des Messerkopfes 1 durch die Stellschraube 6 bewirkt wird. Am Umfang des Messerkopfes sind in bekannter Weise Führungsleisten 7 und 8 angeordnet.

## Patentansprüche

1. Einmesser-Reibahle mit einer mittels einer in einer Aussparung des Messerkopfes (1) angeordneten Spannpratze (2), durch einen Gewindebolzen (4) gegen eine Schulter des Messerkopfes (3) anpressbaren, auswechselbaren, radial mittels eines Stellglieds verstellbaren Messerplatte und am Umfang des Messerkopfes angeordneten Führungsleisten (7,8), **dadurch gekennzeichnet** daß die Spannpratze (2) mit einer Aussparung versehen ist, in der die Messerplatte (3) angeordnet ist, und einen in einer randoffenen Bohrung des Messerkopfes (1) gelagerten, mindestens halbkreisförmigen, eine schaftseitige Verlängerung der Spannpratze (2) bildenden Ausatz (21) aufweist, der als Scheibe ausgebildet ist, deren Schwenkachse durch die Mittelachse des Gewindebolzens (4) verläuft, und daß das Stellglied (5,6) die Spannpratze (2) verschwenkt.

2. Einmesser-Reibahle nach Anpruch 1, **dadurch gekennzeichnet**, daß die Spannpratze (2) eine kreisbogenförmige Begrenzung (22) mit einem Radius aufweist, der kleiner ist als der Radius der Randfläche (12), die die Aussparung im Messerkopf (1) begrenzt, in der die Spannpratze (2) angeordnet ist.

3. Einmesser-Reibahle nach Anspruch 1, **dadurch gekennzeichnet**, daß die die Aussparung im Messerkopf (1) begrenzende Randfläche (12) in Richtung der Einstellkraft eine einem Winkel von 45° entsprechende Bogenlänge aufweist.

4. Einmesser-Reibahle nach Anspruch 1, **dadurch gekennzeichnet,** daß die Messerplatte (3) kreisförmig ausgebildet ist.

## Claims

1. Single blade reamer with a blade plate radially adjustable by means of a regulator, exchangeable and pressable against one shoulder of the blade head (3) through a threaded bolt (4) by means of a clamping claw (2) arranged in a recess of the blade head (1) and guide strips (7,8) arranged on the periphery of the blade head, characterised in that the clamping claw (2), is provided with a recess in which the blade plate (3) is arranged and exhibits an ear (21) forming an extension of the clamping claw (2) on the shaft side, at least semi-circular, mounted in an open-edged hole of the blade head (1), which ear is in the form of a disc, the swivel axis of which runs through the central axis of the threaded bolt (4) and in that the regulator (5,6) swivels the clamping claw (2).

2. Single blade reamer according to claim 1, characterised in that the clamping claw (2) reveals a circular arc-shaped limitation (22) with a radius which is smaller than the radius of the edge face (12), which limits the recess in the blade head (1) in which the clamping claw (2) is arranged.

3. Single blade reamer according to Claim 1, characterised in that the edge face (12) limiting the recess in the blade head (1) in the direction of the adjusting force reveals an arc length corresponding to an angle of 45°.

4. Single blade reamer according to Claim 1, characterised in that the blade plate (3) is circular in form.

## Revendications

1. Alésoir à une lame comprenant une plaque interchangeable, formant couteau qui peut être serrée, au moyen d'une griffe de serrage (2) agencée dans un évidement de la tête porte-lame (1), contre un épaulement de la tête porte-lame (1) et être déplacée radialement au moyen d'un organe de réglage, et des baguettes de guidage (7, 8) disposées à la périphérie de la tête porte-lame, caractérisé en ce que la griffe de serrage (2) est pourvue d'un évidement dans lequel est disposée la plaque (3), et en ce qu'elle présente un appendice (21) qui est supporté dans un trou ouvert sur son bord de la tête porte-lame (1), a une forme au moins semi-circulaire et forme un prolongement de la griffe de serrage (2) du côté de la tige et qui est réalisé sous la forme d'un plateau dont l'axe de pivotement passe par l'axe central de la broche filetée (4), et en ce que l'organe de réglage (5, 6) fait pivoter la griffe de serrage (2).

2. Alésoir à une lame selon la revendication 1, caractérisé en ce que la griffe de serrage (2) présente une surface limitante (22) en forme d'arc de cercle dont le rayon est inférieur à celui de la surface de bord (12) qui borde l'évidement de la tête porte-lame (1) dans lequel est disposée la griffe de serrage (2).

3. Alésoir à une lame selon la revendication 1, caractérisé en ce que la surface de bord (12) qui borde l'évidement pratiqué dans la tête porte-lame (1) présente dans la direction de la force d'ajustement une longueur d'arc correspondant à un angle de 45°.

4. Alésoir à une lame selon la revendication 1, caractérisé en ce que la plaque formant couteau (3) a une forme circulaire.

## Fig. 1

## Fig. 2

## Fig. 3